# EUROPEAN PATENT SPECIFICATION

(11) **EP 2 093 909 B1**
(45) Date of publication and mention of the grant of the patent: **10.12.2014**
(21) Application number: 09162316.5
(22) Date of filing: 22.09.2006
(51) Int. Cl.: H04H 20/59, H04H 60/50, H04H 60/51, H04L 12/18, H04W 4/02, H04W 4/06

(54) **Geography-based filtering of broadcast messages**
Geografie-basierende Filterung von Rundschreibnachrichten
Filtrage de messages de diffusion basé sur des critères géographiques

(30) Priority: 22.09.2005 US 719808; 21.09.2006 US 534065
(43) Date of publication of application: 26.08.2009
(62) Divisional of application: 06815251.1
(73) Proprietor: QUALCOMM Incorporated, San Diego, CA 92121-1714 (US)
(72) Inventor: Williams, David, E-29630, Malaga (ES); Edge, Stephen W., Escondido, CA 92027 (US)
(74) Representative: Catesby, Olivia Joanne

(56) References cited:
- WO-A-96/05678
- WO-A2-01/86508
- WO-A2-02/19741
- GB-A- 2 404 115
- US-A- 5 432 542
- US-A- 6 032 053
- US-A1- 2003 193 394

## Description

### BACKGROUND

This disclosure relates in general to communication systems and, more specifically to location-aware communication systems that send a message to a number of terminals amongst other things.

Current wireless broadcast and multicast services can send information to all users (i.e., broadcast) or designated users (i.e., multicast) with limited regard to the location of the users. At best, the location of target users can be controlled down to a cell sector level today. This crude location accuracy can be adequate for many services of interest to users and broadcasters (e.g., provide information to spectators at a sporting event on the results of similar events being held elsewhere). However, the crude level of location control (i.e., cell sector resolution) will not always be able to discriminate effectively between those users who need to receive, or will be interested in, the particular information and those who need not, or will not.

Various types of broadcast and multicast services have been defined or are currently being defined for wireless networks. These include Multimedia Broadcast Multicast Service (MBMS) for Global System for Mobile Communications (GSM), General Packet Radio Service (GPRS) and Universal Mobile Terrestrial Service (UMTS) and evolved UMTS networks, which are being defined by Third Generation Partnership Project (3GPP). Cell Broadcast Service (CBS) has already been defined by the European Telecommunications Standards Institute (ETSI) and is maintained by 3GPP. Also being defined now are Broadcast services (BCAST) by OMA, Broadcast/Multicast service (BCMCS) by 3GPP2, Digital Video Broadcasting (BVB-H), and MediaFLO™ and various other services. These services will enable different types of information (e.g. video clips, text messages, audio messages and multimedia messages) to be sent to both particular groups of wireless users and to all users in a particular geographic area (potentially defined down to a cell-sector level) and served by particular wireless networks. The services employ various types of coarse filter (e.g. identity of a multicast group, identities of particular cell-sectors, identities of larger geographic areas containing multiple cell-sectors) to select particular sets of target users.

In order to reach all interested or affected users with conventional technology, information is sent to both interested and affected users and uninterested and unaffected ones. This increases the general level of information load which will be a nuisance, possibly increase costs for both network providers and users and make it more difficult to alert users to the most important information, for example to emergency information.

There are emergency multicast services that call telephone numbers to deliver a set message. For example, alert phone calls could be made when a tornado is approaching. Each phone number in the group is part of the multicast. Phone numbers are chosen based upon addresses associated with the phone number.

Some weather and emergency notification systems use radio or television broadcasts to deliver information. This information is sent to everyone who receives a particular channel or signal. Often the notification broadcast indicates a location for which the weather or emergency is relevant for. The user can manually react or not to the notification.

GB 2 404 115 discloses an apparatus for selectively processing a cell broadcast received by a mobile communication device comprises means for determining the geographic coordinates of the mobile communication device, means for receiving a cell broadcast, means for determining whether the cell broadcast identifies a geographical area to which it is relevant, means for comparing the geographic coordinates of the mobile communication device with the geographical areas defined identified in the cell broadcast, and a means for processing the cell broadcast in dependence on the coordinates of the unit falling within the area identified in the cell broadcast.

### SUMMARY

In accordance with the present invention there is provided a wireless terminal and method of filtering broadcast or multicast messages as set out in the appended claims.

The present disclosure further provides a communication system for filtering multi-destination messages. The communication system includes a number of transmitters, an interface, a first filter, and a second filter. The number of transmitters are configured to send information wirelessly to a number of wireless terminals. The interface is configured to receive messages intended for at least some of the number of wireless terminals, where the number of wireless terminals include a wireless terminal. The first filter is configured to determine a subset of the number of transmitters that generally correspond to a predetermined geographic criteria, where the subset are configured to transmit a message. The second filter is configured to determine if the wireless terminal corresponds to the predetermined geographic criteria.

The present disclosure further provides a method for filtering multi-destination messages. In one step, messages intended for at least some of a number of wireless terminals are received, where the number of wireless terminals comprise a wireless terminal. A subset of a plurality of transmitters is determined, where the subset generally correspond to a predetermined geographic criteria. The message is wirelessly transmitted to a number of wireless terminals using the subset. It is determined if the wireless terminal corresponds to the predetermined geographic criteria.

The present disclosure further provides a communication system for filtering multi-destination messages. The communication system includes means for receiving messages, first means for determining, means for transmitting, and second means for determining. The means for receiving messages serves to receive messages intended for at least some of a plurality of wireless terminals, where the plurality of wireless terminals comprise a wireless terminal. The first means for determining serves to determine a subset of a plurality of transmitters, where the subset generally correspond to a predetermined geographic criteria. The means for transmitting serves to transmit the message wirelessly to a plurality of wireless terminals using the subset. The second means for determining serves to determine if the wireless terminal corresponds to the predetermined geographic criteria.

The present disclosure further provides a communication device for filtering multi-destination messages, where the communication device includes a processor and a memory. The processor is configured to: receive messages intended for at least some of a plurality of wireless terminals, wherein the plurality of wireless terminals comprise a wireless terminal; determine a subset of a plurality of transmitters, wherein the subset generally correspond to a predetermined geographic criteria; determine if the wireless terminal corresponds to the predetermined geographic criteria; and transmit the message wirelessly to a plurality of wireless terminals using the subset. The memory is coupled with the processor.

Further areas of applicability of the present disclosure will become apparent from the detailed description provided hereinafter. It should be understood that the detailed description and specific examples, while indicating various embodiments, are intended for purposes of illustration only and are not intended to necessarily limit the scope of the disclosure.

### BRIEF DESCRIPTION OF THE DRAWINGS

The present disclosure is described in conjunction with the appended figures:
FIGs. 1A and 1B depict block diagrams of embodiments of a communication system;
FIGs. 2A, 2B and 2C depict block diagrams of embodiments of a mobile terminal;
FIGs. 3A, 3B and 3C depict diagrams of embodiments of a geographic layout showing a number of mobile terminals;
FIGs. 4A, 4B and 4C illustrate flowcharts of embodiments of a process for filtering multi-destination messages; and
FIG. 5 illustrates a block diagram of an embodiment of a communication system.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

### DETAILED DESCRIPTION

The ensuing description provides preferred exemplary embodiment(s) only, and is not intended to limit the scope, applicability or configuration of the disclosure. Rather, the ensuing description of the preferred exemplary embodiment(s) will provide those skilled in the art with an enabling description for implementing a preferred exemplary embodiment. It being understood that various changes may be made in the function and arrangement of elements without departing from the scope as set forth in the appended claims.

One embodiment provides a method to filter information sent by broadcast and multicast services using location criteria for potential target users such that the proportion of users who receive the information and need to receive the information is significantly increased without reducing the number of such users. The method and apparatus is applicable whenever location plays some role in determining the set of target users.

There is a distinction between information received by a mobile terminal and information received by the user of a mobile terminal. Generally, filtering increases the number of user's of mobile terminals who receive information that actually can use the received information. This may be accomplished, in part or in whole, by increasing the proportion of mobile terminals who can use the received information on behalf of users who can use the received information. The mobile terminal may play a lesser or no role in supporting further filtering where the granularity of targeting is precise. Reaching those that can use the received information can also be done by increasing the proportion of mobile terminals who receive information on behalf of users who can use the received information in which case the mobile terminal may play a greater role in supporting further filtering. Some examples of this embodiment are provided further on herein.

In one embodiment, a new type of filter based on location information and location related criteria is disclosed. A broadcast sender is allowed to define particular location criteria that a prospective target mobile terminal satisfies in order to be enabled to receive the broadcast information or to pass on the broadcast information to the user or in order to receive or pass on the information with a particular priority indication. The criteria can include in various embodiments, but are not limited to, the following:
(a) Current location of a target mobile terminal inside of or outside of certain designated geographic areas, as specified by different two dimensional geometric shapes such a circle, ellipse or polygon. Each shape could be defined by specifying the coordinates (e.g., latitude, longitude) of certain points plus its geometric attributes and dimensions. For example, a circular area could be specified by the coordinates of its center plus its radius. A polygon might be specified using the coordinates of each of its vertices.
(b) Current altitude of a target mobile terminal above or below the earth's surface or above or below local ground level. The altitude could be specified as a range within which or outside of which the target mobile terminal needs to be.
(c) Previous location of a target mobile terminal as defined in (a) and/or (b) at some specific previous time or during a range of previous times or at any time in the past.
(d) Future location as defined in (a) and/or (b) of a target mobile terminal at some specific future time or during a range of future times or at any time in the future. Future location might be based on an extrapolation of the mobile terminal's current movement or, in some instances, on the user of the mobile terminal's known intent or requirement to be in or near some location or outside of or away from some location at a future time. For example, the user may have entered a target address into a routing function of the mobile terminal.
(e) Location of the mobile terminal as in (a), (b), (c), and/or (d) above but expressed in a civic manner - for example using a particular postal address, range of postal addresses, name of a street or set of streets, name and/or address of a building, city/county/state limit or well known location (e.g. airport, shopping mall, sports stadium, theatre, hotel). In the case of altitude, floor or subbasement level could be used.
(f) Current speed of a target mobile terminal expressed as a range within which or outside of which the target mobile terminal is traveling to qualify for the criteria.
(g) Current bearing (direction of movement) of a target mobile terminal expressed as a range within which or outside of which the mobile terminal is traveling to qualify for the criteria.
(h) Past and/or future speed and/or past and/or future direction of movement of a target mobile terminal.

Any logical combination of the above criteria could be used to provide finer levels of filtering by combining two or more of the above criteria using logical "and", logical "or" and logical "not" operations. For example, information on the blockage of a major highway in one direction but not the other might be associated with location criteria identifying moving mobile terminals in the immediate vicinity of the blockage (e.g., users who might be considering entering the highway), plus (logical "or") mobile terminals whose current location, speed and bearing implied possible arrival at the blockage before it was likely to be cleared. In another example, a tornado alert might be sent to target mobile terminals in a certain tall building whose altitude above a certain floor level placed them in greater jeopardy such that they are notified. In yet another example, information regarding the finding of a lost item (e.g., watch, jewelry, money) in a shopping mall might be sent to target mobile terminals whose previous location at or near the time of discovery placed them in or near the shopping mall.

The above criteria could be combined with certain non-geographic criteria such as the nature of the broadcast message (e.g., personal, job related, public, or emergency), the time at which the information becomes significant (e.g., date at which a sales event will occur) and the category of sender (e.g., user's wireless network operator, friend/relative, employer, public safety). Any filtering operation may then combine all the available criteria and determine the usefulness (e.g., priority to the user), the mode in which the information will be presented (e.g., whether using audible, visual and/or tactile signals) and possibly the time at which the information will be presented (e.g. whether immediately, at some defined later time or only when the user later makes some request to become aware of new information).

The filtering operation itself could be performed by the network and/or by the user's wireless terminal and/or by the user in various embodiments. Manual filtering by the user may be regarded as a last resort, to be avoided if at all possible, due to the possibility of delay and error as well as disturbing the user in cases where the user ends up discarding the message. In the case of network filtering, the network (for example, a wireless network Mobile Switching Center (MSC), Serving GPRS Support Node (SGSN), Call Server Control Function (CSCF), Base Station Subsystem (BSS), Radio Network Controller (RNC)) may obtain information regarding the current location, altitude, speed and bearing of a prospective target wireless terminal by determining the position of the mobile terminal or by querying another entity (e.g., a Position Determination Entity (PDE) or Serving Mobile Location Center (SMLC) or the user equipment (UE) itself). Positioning methods that could be used include such existing capabilities as enhanced cell identification (ID), Uplink Time Difference of Arrival (U-TDOA), Enhanced Observed Time Difference (E-OTD), Observed Time Difference Of Arrival (OTDOA), Assisted-Global Positioning System (A-GPS), and/or GPS. Future positioning systems such as Galileo could also be used in some embodiments.

In addition, the communication network may retrieve historic location information obtained and stored previously or query some server for this information. The network may also attempt to extrapolate or otherwise predict the mobile terminal's future location or a range of possible future locations, based for example on the mobile terminal's current location, speed and bearing. Based on this location information and the location criteria associated with the broadcast, the network may determine whether the particular broadcast information should or should not be sent to the mobile terminal.

Alternatively, based on the location information and location criteria, the network may determine that the broadcast information should be sent to the mobile terminal but with some priority or other indication indicating the level of importance to assist the mobile terminal in deciding whether and when to access the information. The priority or similar indication might be determined by both the importance of the broadcast information itself and the degree to which the mobile terminal's location information matched the associated location criteria. The priority indication could then enable an appropriate means of alerting the mobile terminal user to the availability of the information. For example, for particularly urgent information that the user should access immediately, the mobile terminal, based on a high indicated priority, may alert the user immediately by means of audible, visual and/or tactile (e.g., vibrational) cues. The priority may instead indicate less urgent, though still possibly important information, that the user should access soon but not necessarily immediately. In this case, the mobile terminal might just provide a low level audible indication (e.g. several beeps) and/or visual cue (e.g., screen icon).

In another embodiment, the information may be broadcast or multicast to a set of mobile terminals based on coarse filtering criteria such as membership of a multicast group and/or service in particular cell-sectors of a wireless network. The information may be accompanied by the associated location criteria. The mobile terminal would obtain the current location information for the mobile terminal, for example by using such existing positioning methods as A-GPS, GPS, E-OTD, Advanced Forward Link Trilateration (A-FLT), OTDOA, cell-sector ID, enhanced cell ID or some combination of these methods or, in future, methods that might make use of new satellite positioning systems such as the European GALILEO system. The mobile terminal could also retrieve previous location information and predict future location information through immediately preceding location readings or through historical patterns. For example, the same path may be taken most mornings in a work commute such that the next day, the mobile terminal may predict another work commute similar to prior commutes or may predict such another work commute when location changes start to replicate what was observed in previous commutes.

The terminal compares the location information with the location criteria for the broadcast information and determines whether the information should be presented to the user and, if so, with what priority. Once the terminal has determined whether the user should be presented with, or alerted to the presence of, the information and has possibly obtained a particular priority, the terminal may treat the information the same as if the network had made this determination and provided any priority information - e.g., it may alert the user immediately for any particularly urgent information or may provide less urgent possibly delayed alerting for lower priority information. The Table lists exemplary customized alerts for various classes of location-based messages. The user can interact with an application or web screen or a screen of the wireless terminal to configure alerts. In some cases, the alert may be relayed by the terminal to other devices in a Personal Area Network (e.g., TV or computer) to increase the probability of the user perceiving the alert.

| **Message Class** | **Table. Exemplary Message Alerts Alert** |
|---|---|
| General Weather Warning | Vibration |
| General Traffic Jam | Vibration |
| General Advertisement | Screen Message with Periodic Tone |
| Specific Weather Warning | Tone & Message displayed on other devices in a Personal Area Network |
| Specific Traffic Jam | Tone & Vibration |
| Custom Advertisement | Status Light & Tone With Over 5 Ads |

In the event that the mobile terminal performs filtering based on location information included in the information being broadcast and location information for terminal, it may be possible to determine whether the information should be provided to the user before all the information has been received. If the determination is not to present the information to the mobile terminal, it would be possible for the terminal to discontinue receipt of the broadcast information, thereby potentially saving terminal resources (e.g., battery, processor, memory) and a possible monetary charge for receiving the broadcast information (which may have unnecessarily used reverse link resources) and/or freeing up terminal resources for other tasks.

It would also be possible to employ filtering in both the network and terminal - for example, coarse filtering in the network and away from the mobile terminal based on approximate location information indicated by terminals presence in particular cells and cell-sectors and finer more comprehensive filtering in terminals. Both modes of filtering could also be employed to support subsets of terminals that could not support filtering themselves - in that case, the network might perform filtering for these subsets of terminals with other terminals that were capable of performing filtering doing this for themselves.

In some cases, the communication network may have little or no knowledge of the locations and/or identities of prospective wireless terminals. No knowledge of location could occur, for example, with a user whose terminal was accessing a WLAN when the WLAN or WLAN location was unknown or not reliably known to the wireless network. No knowledge of identity and location may occur with any wireless technology when potential recipient mobile terminals act passively (e.g., when the wireless terminal is not required to support a call or other user related activity) and does not identify themselves to the network as potential recipients for a particular broadcast. This may occur to reduce signaling overhead or if the broadcast/multicast solution is not able to identify some or all recipient users. In such cases, the network may need to broadcast information to a much larger set of mobile terminals than the intended recipients and rely on location filtering in the mobile terminals to appropriately accept the information and pass it to the users.

In another embodiment, the network or mobile terminal may employ a database or other method to convert geographic location information (e.g. latitude/longitude) into a civic form (e.g. street address, building identification) and compare this with any civic related location criteria. The network or mobile terminal may also employ both civic and geographic (e.g. latitude/longitude) types of location information and criteria. For example, in order to determine if a moving mobile terminal is likely to reach a blockage on a major highway before the blockage is likely to be cleared, it may be necessary to establish that the mobile terminal is actually traveling along the highway by means of successive geographic location fixes whose conversion into a civic form, or comparison with civic mapping information, verifies locations along the highway. Other civic mapping could include recognizing country/state/county/city boundaries. Messages could be realized on mobile terminals according to their location relative to the civic boundaries.

Some exemplary applications are listed below:
(a) Provision of a localized emergency notification service to notify or warn users in a building, in a particular section of a building or in any other area of a possible or actual threat or danger - e.g., fire, terrorism, tornado, earthquake, storm surge, industrial accident, structural failure, and/or impairment to a building, road, bridge, or tunnel.
(b) Notify users of current or future expected traffic conditions. The notification could also include possible alternative driving routes.
(c) Notify users of public transport of current or expected delays and cancellations and possibly indicate alternative routes and services.
(d) Notify users of current or future weather conditions at their current location or in future prospective locations.
(e) Access users who were previously in a certain location or vicinity - for example who may have been witnesses to a traffic accident or may have been in contact with a contagious disease.
(f) Advertise to users within a particular shop, shopping mall, recreational area or any other location (e.g., airport, hotel, railway station, and/or sports or concert arena) of products, services, sales and other opportunities.
(g) Provide travel or sightseeing information to users at a particular location or heading towards a particular location.

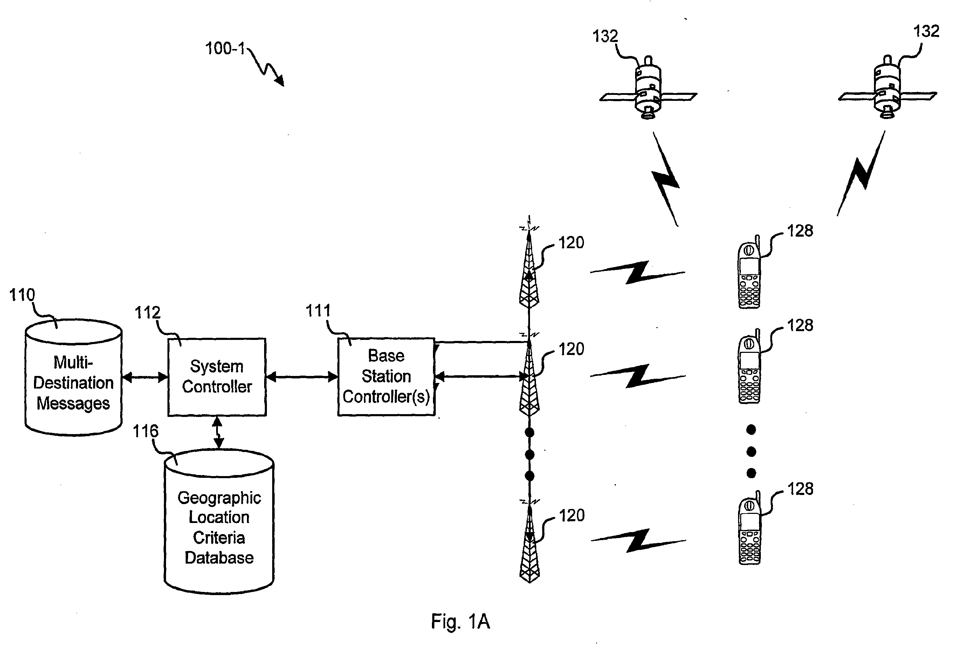

Referring first to **FIG. 1A****,** a block diagram of an embodiment of a communication system 100-1 is shown. Satellites 132, for example, are used by the mobile terminals 128 to determine their location using a Satellite Positioning System (SPS). These satellites 132 may be from a Global Positioning System (GPS), Galilleo, GLONASS, NAVSTAR, a system that uses satellites from a combination of these systems, or any SPS developed in the future. As used herein, an SPS will also be understood to include pseudolite systems.

A number of mobile terminals 128 communicate with a number of base stations 120. Mobile terminal refers to a device such as a cellular telephone, wireless communication device, user equipment, or other personal communication system (PCS) device. A base station controller 111 communicates with the base stations 120. A system controller 112 communicates directly or indirectly with the base station controller 111. Some embodiments may have any number of base station controllers 111 and base stations 120.

A multi-destination database 110 holds messages that are meant for broadcast or multicast to one or more mobile terminals 128. Each message has a corresponding geographic location criteria defined in the geographic location criteria database 116. The geographic location criteria can be a point, an area, a volume, an altitude, and/or a civic boundary. This embodiment chooses the base stations 120 for a particular message that generally correspond to a predetermined geographic location criteria. Each base station 120 corresponds to a cell sector in this embodiment. The cell sectors that correspond to the geographic location criteria are determined and their corresponding base stations 120 are selected. Those base stations 120 broadcast the message and the mobile terminals 128 in the geographic location criteria accept the message. The various data stores and databases could be any storage medium that is machine-readable.

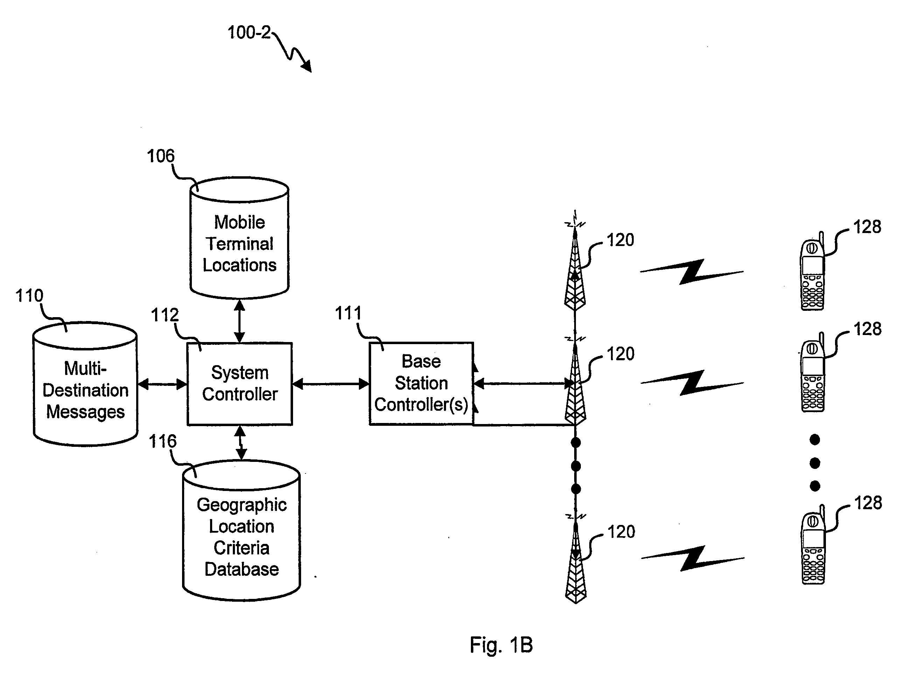

With reference to **FIG. 1B**, a block diagram of another embodiment of the communication system 100-2 is shown. In this embodiment, those mobile terminals 128 within a predetermined geographic location criteria are multicasted the message by choosing the appropriate base stations 120 and communication channels.

This embodiment knows the location of each mobile terminal 106 whose locations are stored in a mobile terminal location database 106. In this embodiment, the system controller 112 or some other place in the communication network 100-2 determines the mobile terminal locations. Position determination techniques described herein may be used for various wireless communication networks such as a wireless wide area network (WWAN), a wireless local area network (WLAN), a wireless personal area network (WPAN), and so on. The term "network" and "system" are often used interchangeably. A WWAN may be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, and so on. A CDMA network may implement one or more radio access technologies (RATs) such as cdma2000, Wideband-CDMA (W-CDMA), and so on. Cdma2000 includes IS-95, IS-2000, and IS-856 standards. A TDMA network may implement Global System for Mobile Communications (GSM), Digital Advanced Mobile Phone System (D-AMPS), or some other RAT. GSM and W-CDMA are described in documents from a consortium named "3rd Generation Partnership Project" (3GPP). Cdma2000 is described in documents from a consortium named "3rd Generation Partnership Project 2" (3GPP2). 3GPP and 3GPP2 documents are publicly available. A WLAN may be an IEEE 802.11x network, and a WPAN may be a Bluetooth network, an IEEE 802.15x, or some other type of network. The techniques may also be used for any combination of WWAN, WLAN and/or WPAN.

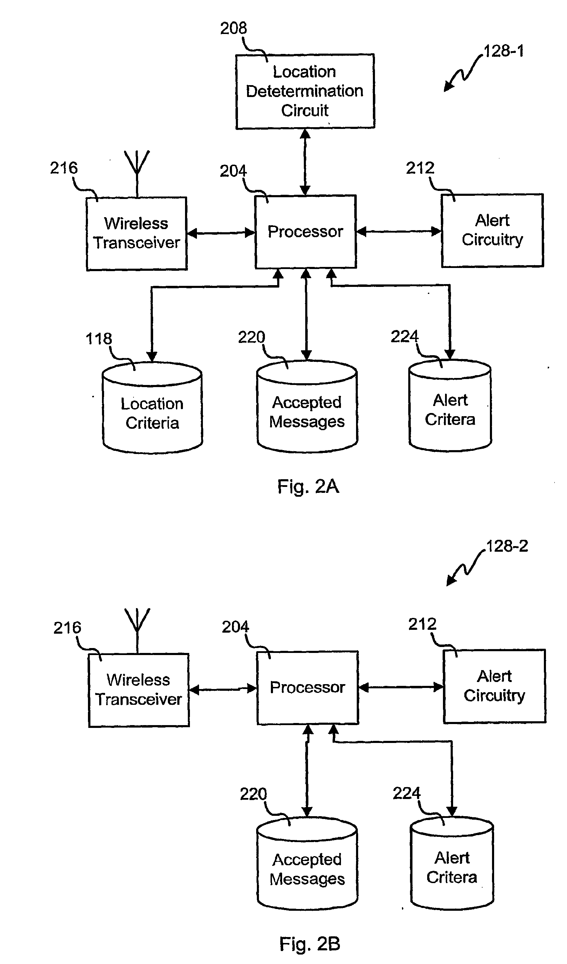

Referring next to **FIG. 2A****,** a block diagram of an embodiment of a mobile terminal 128-1 is shown. Under the control of the processor 204, the mobile terminal 128 can perform several functions. This embodiment is capable of independently determining location with a location determination circuit 208. A wireless transceiver 216 receives messages for storage in an accepted message database 220. The predetermined geographic location criteria is received as metadata in the same message or separate from the message and stored in the location criteria database 118. Alert criteria 224 are applied against the accepted messages to notify the user with alert circuitry 212.

With reference to **FIG. 2B****,** a block diagram of another embodiment of the mobile terminal 128-2 is shown. This embodiment does not determine location by itself, but uses other parts of the communication system 100 to determine location. Messages are multicasted to the mobile terminal 128-2 such that if received by the wireless transceiver, they are processed for alerts.

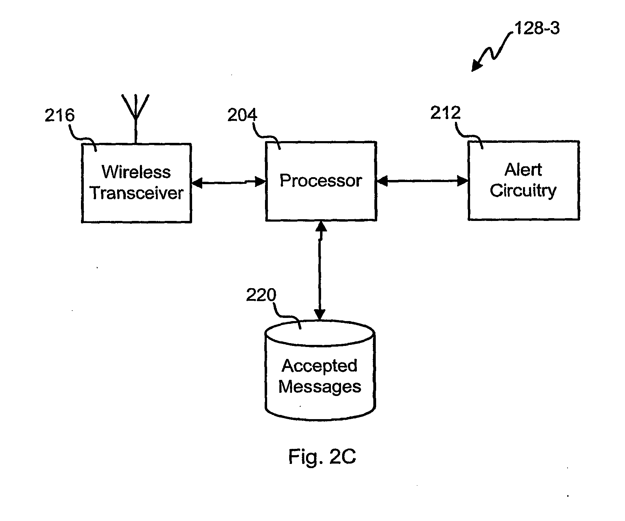

Referring next to **FIG. 2C**, a block diagram of yet another embodiment of the mobile terminal 128-3 is shown. This embodiment does not store alert criteria local to the mobile terminal 128-3. The alert to use is sent with the message or in a separate message. The alert circuitry 212 performs the alert specified remotely in the message. A user of the mobile terminal 128-3 can set up the alerts with the system controller such that the selected alerts can be implemented without the mobile terminal 128-3 having to store the various alerts.

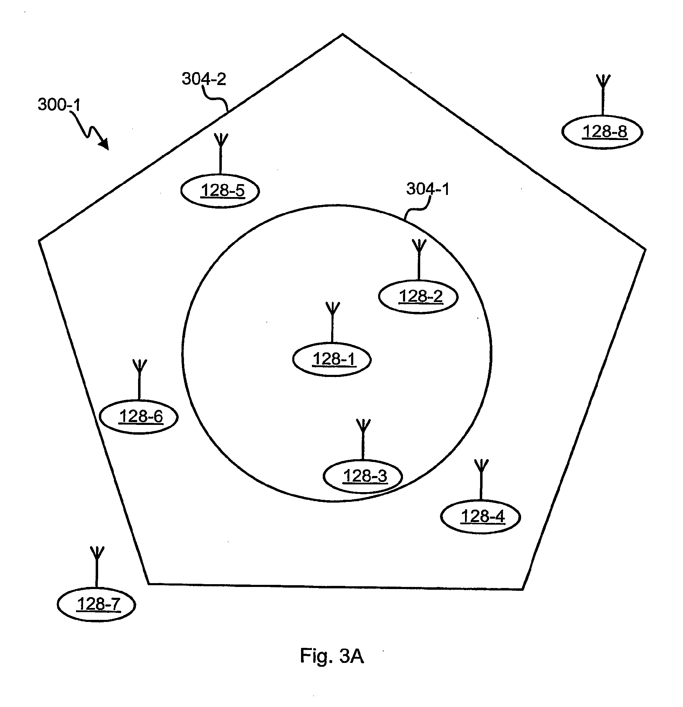

With reference to **FIG. 3A**, a diagram of an embodiment of a geographic layout 300-1 is shown depicting a number of mobile terminals 128. The resolution of the communication system resolves the geographic location to a particular cell 304-2 such that the corresponding base stations 120 can send the message. The predetermined geographic location 304-1 is smaller than the cell area in this embodiment. Three mobile terminals 128-1, 128-2, 128-3 are within the predetermined geographic location criteria 304-1 such that they accept the message for processing. Some mobile terminals 128-4, 128-5, 128-6 receive the message as they are in the cell area, but do not use the message after checking their location against the predetermined geographic location criteria 304-1.

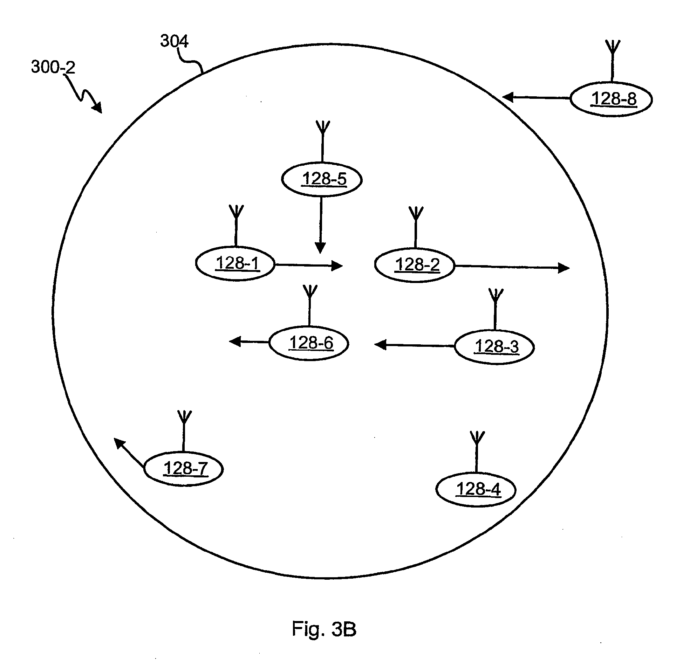

Referring next to **FIG. 3B****,** a diagram of another embodiment of a geographic layout 300-2 is shown depicting a number of mobile terminals 128. This embodiment shows the bearing of travel and speed with an arrow and length of arrow, respectively. The geographic location criteria in this embodiment is a particular road for traffic going in a certain direction(s). For example, mobile terminals 128-1 and 128-2 are traveling down the same road in one direction and mobile terminals 128-3 and 128-6 are traveling in the opposite direction. A geographic location criteria can be defined to include 128-1 and 128-2 and/or 128-3 and 128-6. The message sent to the mobile terminals of the geographic location criteria could be a traffic alert that is germane to the street traveled upon. Seven mobile terminals 128 are within the communication range 304 of the selected base station 120, but only two are traveling in the correct direction to be included in the geographic location for this embodiment.

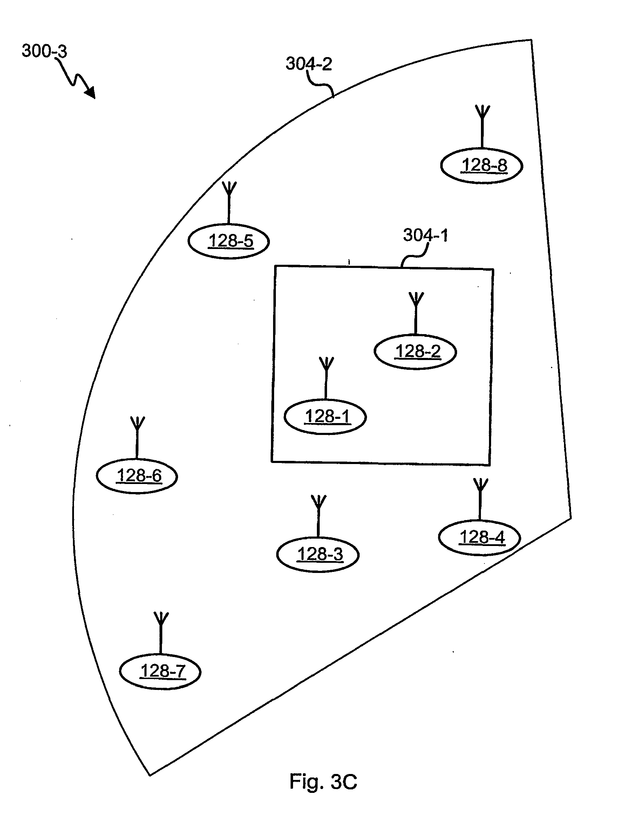

With reference to **FIG. 3C**, a diagram of yet another embodiment of a geographic layout 300-3 is shown depicting a number of mobile terminals 128. This embodiment broadcasts a message to a third 304-2 of a circular cell emanating from the base station. The message indicates the geographic location criteria 304-1 is limited to a square section within that third 304-2. Only two mobile terminals 128-1, 128-2 would accept and use the message for a possible alert. Other mobile terminals 128 could receive the message but would discontinue receipt or ignore it or provide it to the user with low priority when the mobile terminal's location is determined to be outside the geographic location criteria.

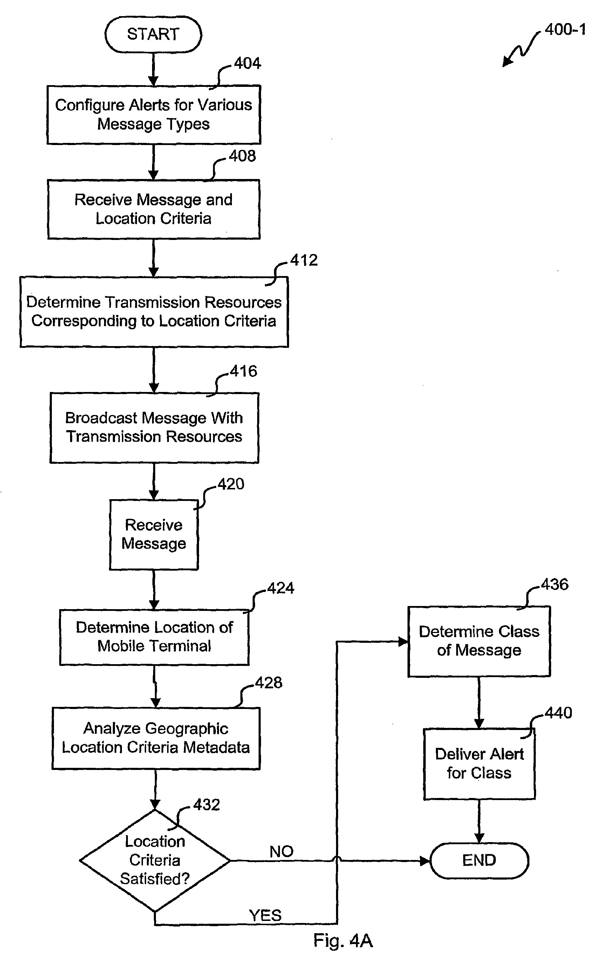

Referring next to **FIG. 4A**, a flowchart of an embodiment of a process 400-1 for filtering multi-destination messages is shown. The depicted portion of the process begins in block 404 where alerts are configured for various message types. This configuration could take place with the mobile terminal 128 or through an application or web interface to the system controller 112. A message is received by the system controller 112 with the location criteria for the message in block 408. The message and location criteria may be stored in databases 110, 116. Transmission resources are determined for the geographic location criteria in block 412, which could include selecting a number of base stations and/or a number of groupings of base stations that cover the geographic location criteria.

This embodiment broadcasts the message with embedded location criteria metadata in block 416. The message is received by one or more mobile terminals 128 in block 420. The mobile terminal 128 either determines its location or uses a location externally relayed to the mobile terminal 128 in block 424. The geographic location criteria is analyzed in block 428 and a determination is made in block 432 to see if the location of the mobile terminal 128 satisfies the criteria. The process 400-1 ends where the location criteria is not satisfied and processing of the message stops.

An accepted message is further processed to determine and present any appropriate alerts. In block 436, the class of the message is determined. These classes correspond to groupings of message types configured in block 404. For example, a severe weather alert may be classified at the same level as an airplane delay notice. Once the class is known, the configured alert can be delivered in block 440. For example, the class may result in vibratory alert and screen message. Once the alert is delivered, processing ends in this embodiment. Some embodiments may continue to deliver the alert until turned off permanently or temporarily.

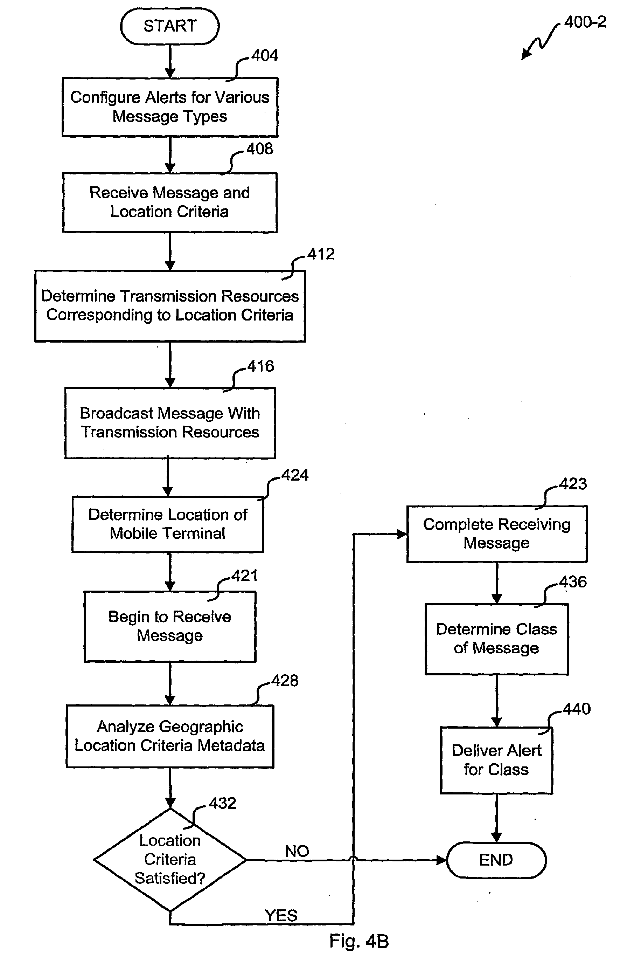

With reference to **FIG. 4B****,** a flowchart of another embodiment of a process 400-2 for filtering multi-destination messages is shown. This embodiment is performed the same as the embodiment of FIG. 4A through block 416. Processing goes from block 416 to block 424 where the location of the mobile terminal is determined using the mobile terminal 128 alone, external to the mobile terminal 128 or with a combination of the mobile terminal and other components. Receipt of the message is begun in block 421.

Once enough of the message is received to know the geographic location criteria or the geographic location criteria are otherwise received, the criteria are analyzed in block 428. Where the location criteria are not satisfied by the location of the mobile terminal 128, the remainder of the message is not received and the process 400-2 ends. Should the criteria be satisfied, the remaining portions of the message are received in block 423 before completing blocks 436 and 440 in the same manner as the embodiment of FIG. 4A.

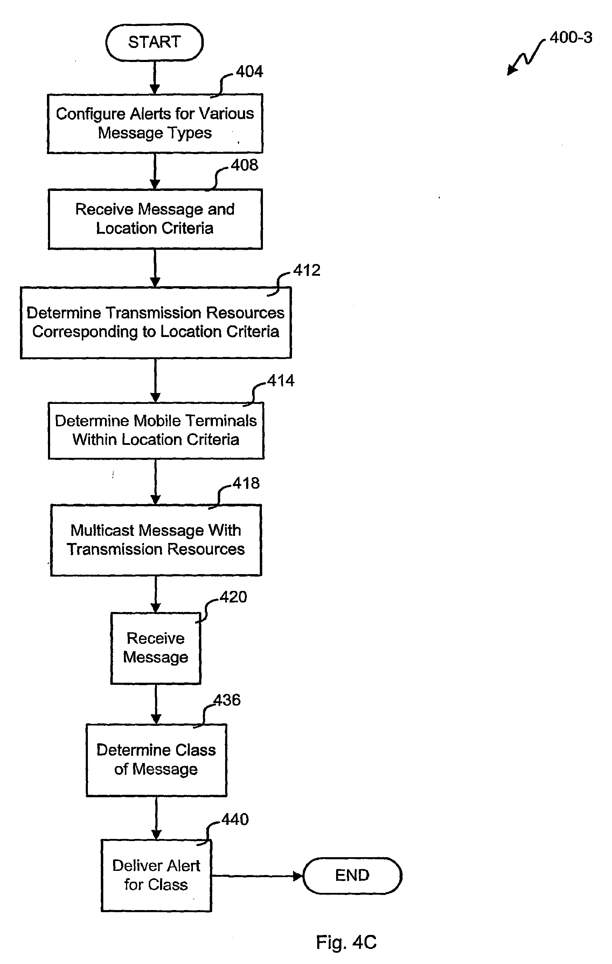

Referring next to **FIG. 4C****,** a flowchart of yet another embodiment of a process 400-3 for filtering multi-destination messages is shown. This embodiment behaves the same as the embodiment of FIG. 4A through block 412. In block 414, the mobile terminals within the location criteria are determined 414. The system controller 112 knows the location of each mobile terminal and can make the determination of which ones qualify under the location criteria. The message is multicasted to one or more mobile terminals 128 using the appropriate base stations 120.

Once the message is received in block 420, it is presumed to qualify under a location criteria. Processing continues through block 436 and 440 to analyze and deliver the alert. After block 440, the process 400-3 ends.

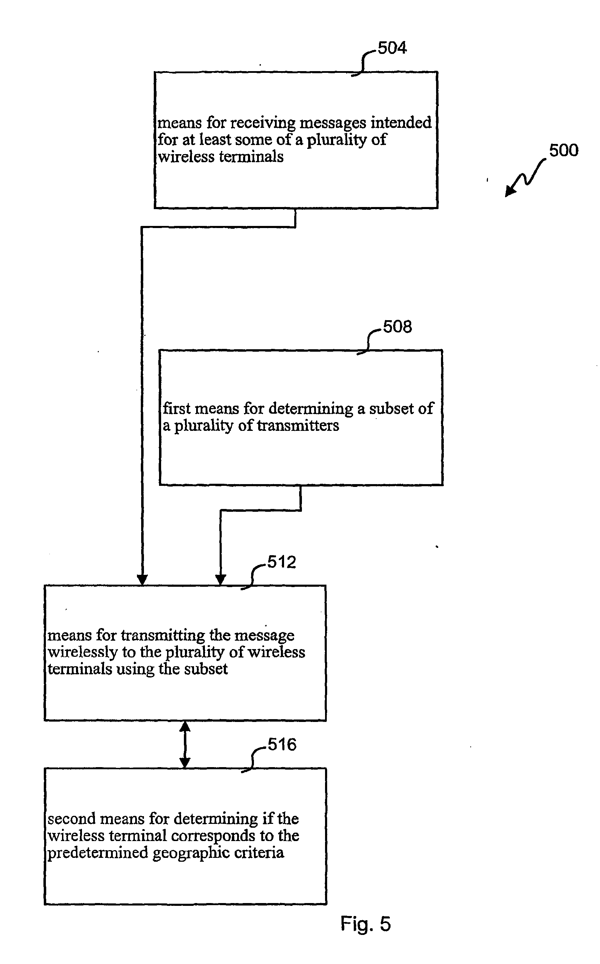

With reference to **FIG. 5**, a block diagram of an embodiment of a communication system 500 for filtering multi-destination messages is shown. The communication system includes means for receiving messages 504, first means for determining 508, means for transmitting 512, and second means for determining 516. The means for receiving messages 504 serves to receives messages intended for at least some of a plurality of wireless terminals, where the plurality of wireless terminals comprise a wireless terminal. The first means for determining 508 serves to determine a subset of a plurality of transmitters, where the subset generally correspond to a predetermined geographic criteria. The means for transmitting 512 serves to transmit the message wirelessly to a plurality of wireless terminals using the subset. The second means for determining 516 serves to determine if the wireless terminal corresponds to the predetermined geographic criteria.

Specific details are given in the above description to provide a thorough understanding of the embodiments. However, it is understood that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, scripting languages, firmware, middleware, microcode, hardware description languages, and/or any combination thereof. When implemented in software, firmware, middleware, scripting language, and/or microcode, the program code or code segments to perform the necessary tasks may be stored in a machine readable medium such as a storage medium. A code segment or machine-executable instruction may represent a procedure, a function, a subprogram, a program, a routine, a subroutine, a module, a software package, a script, a class, or any combination of instructions, data structures, and/or program statements. A code segment may be coupled to another code segment or a hardware circuit by passing and/or receiving information, data, arguments, parameters, and/or memory contents. Information, arguments, parameters, data, etc. may be passed, forwarded, or transmitted via any suitable means including memory sharing, message passing, token passing, network transmission, etc.

Implementation of the techniques described above may be done in various ways. For example, these techniques may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described above, and/or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a memory, for example the memory of mobile terminal, and executed by a processor, for example the microprocessor of a modem. Memory may be implemented within the processor or external to the processor. Memory may be implemented within the processor or external to the processor. As used herein the term "memory" refers to any type of long term, short term, volatile, nonvolatile, or other storage medium and is not to be limited to any particular type of memory or number of memories, or type of media upon which memory is stored.

Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "machine-readable medium" includes, but is not limited to portable or fixed storage devices, optical storage devices, wireless channels, and/or various other mediums capable of storing, containing or carrying instruction(s) and/or data.

While the principles of the disclosure have been described above in connection with specific apparatuses and methods, it is to be clearly understood that this description is made only by way of example and not as limitation on the scope of the disclosure.

## Claims

1. A wireless terminal (128) for filtering broadcast or multicast messages, the wireless terminal comprising:
means for receiving (504) a message intended for at least some of a plurality of wireless terminals, wherein the plurality of wireless terminals comprise the wireless terminal (128),
means for receiving geographic location criteria associated with the message and non-geographic criteria associated with the message;
means for enabling determination of location information of the wireless terminal (128);
means for determining if the location information of the wireless terminal (128) corresponds to geographic location criteria;
means for determining a message class for the received message based on the geographic location criteria and the non-geographic criteria;
means for performing an alert if the location information corresponds to the geographic location criteria wherein the alert mode is based on the message class, and wherein the alert is performed at a time based on the message class.

2. The wireless terminal (128) for filtering broadcast or multicast messages as recited in claim 1, wherein the geographic location criteria further comprises a geometric shape in two- or three-dimensions.

3. The wireless terminal (128) for filtering broadcast or multicast messages as recited in claim 1, further comprising means for receiving the message or discontinuing receipt of the message based, at least in part, on determining if the geographic criteria of the wireless terminal corresponds to a geographic location criteria.

4. The wireless terminal (128) of Claim 1 wherein the means for receiving is a wireless transceiver (216) and the means for enabling and means for determining is a processer (204) configured to: direct the wireless transceiver (216) to receive a message intended for at least some of a plurality of wireless terminals, wherein the plurality of wireless terminals comprise a wireless terminal; and further comprising a memory coupled with said processor.

5. The wireless terminal (128) of Claim 1 wherein the means for performing an alert is an alert circuitry (212).

6. The wireless terminal (218) for filtering broadcast or multicast messages as recited in claim 4, wherein the processor directs the wireless transceiver (216) to receive the message or discontinue receipt of the message based, at least in part, on determining if the location information of the wireless terminal corresponds to the geographic location criteria.

7. A method for filtering broadcast or multicast messages, the method comprising the steps of:
receiving at a wireless terminal (128) a message intended for at least some of a plurality of wireless terminals, wherein the plurality of wireless terminals comprises the wireless terminal (128), further receiving geographic location criteria associated with the message, and non-geographic criteria associated with the message;
enabling determination of a location information of the wireless terminal; and
determining if the location information of the wireless terminal corresponds to a geographic location criteria; wherein the geographic location criteria comprises a civic boundary, an altitude, a velocity, a direction of travel, a past location of the wireless terminal, or an anticipated future location of the wireless terminal;
wherein if the location information correspond to the geographic location criteria, the method further comprises:
determining (436) a message class for the received message based on the geographic location criteria and the non-geographic criteria; and
performing (440) an alert wherein the alert mode is based on the message class, and wherein the alert is performed at a time based on the message class.

8. The method for filtering broadcast or multicast messages as recited in claim 7, wherein the geographic location criteria further comprises a geometric shape in two- or three-dimensions.

9. The method for filtering broadcast or multicast messages as recited in claim 7, wherein the message includes metadata specifying the geographic location criteria.

10. The method for filtering broadcast or multicast messages as recited in claim 7, further comprising receiving the message based, at least in part, on the determining step.

11. The method for filtering broadcast or multicast messages as recited in claim 10, further comprising:
beginning to receive the message; and
discontinuing the receipt of the message based upon the determining step.

12. A computer-readable medium comprising instructions, which, when executed by a processing unit, cause the processing unit to implement the method of any of Claims 7 to 11.

## Patentansprüche

1. Ein Drahtlosendgerät (128) zum Filtern von Broadcast- oder Multicast-Nachrichten, wobei das Drahtlosendgerät Folgendes aufweist:
Mittel zum Empfangen (504) einer Nachricht, die für wenigstens einige einer Vielzahl von Drahtlosendgeräten vorgesehen ist, wobei die Vielzahl von Drahtlosendgeräten das Drahtlosendgerät (128) aufweist,
Mittel zum Empfangen geographischer Standortkriterien, die mit der Nachricht assoziiert sind, und nicht geographischen Kriterien, die mit der Nachricht assoziiert sind;
Mittel zum Aktivieren der Bestimmung der Standortinformation des Drahtlosendgeräts (128);
Mittel zum Bestimmen, ob die Standortinformation des Drahtlosendgeräts (128) den geographischen Standortkriterien entspricht;
Mittel zum Bestimmen einer Nachrichtenklasse für die empfangene Nachricht basierend auf den geographischen Standortkriterien und den nichtgeographischen Kriterien;
Mittel zum Durchführen einer Benachrichtigung, wenn die Standortinformation den geographischen Standortkriterien entspricht, wenn der Benachrichtigungsmodus auf der Nachrichtenklasse basiert, und wobei die Benachrichtigung zu einem Zeitpunkt basierend auf der Nachrichtenklasse durchgeführt wird.

2. Drahtlosendgerät (128) zum Filtern von Broadcast- oder Multicast-Nachrichten nach Anspruch 1, wobei die geographischen Standortkriterien weiter eine geometrische Form in zwei oder drei Dimensionen aufweisen.

3. Drahtlosendgerät (128) zum Filtern von Broadcast- oder Multicastnachrichten nach Anspruch 1, das weiter Mittel zum Empfangen der Nachricht oder zum Abbrechen des Empfangs der Nachricht basierend zumindest teilweise auf der Bestimmung aufweist, ob die geographischen Kriterien des Drahtlosendgeräts einem geographischen Standortkriterium bzw. geographischen Standortkriterien entsprechen.

4. Drahtlosendgerät (128) nach Anspruch 1, wobei die Mittel zum Empfangen ein Drahtlostransceiver (216) sind und die Mittel zum Aktivieren und die Mittel zum Bestimmen ein Prozessor (204) sind, der konfiguriert ist zum: Anweisen des Drahtlostransceivers (216) eine Nachricht zu empfangen, die für wenigstens einige einer Vielzahl von Drahtlosendgeräten vorgesehen ist, wobei die Vielzahl von Drahtlosendgeräten ein Drahtlosendgerät aufweist; und weiter einen Speicher aufweist, der an den Prozessor gekoppelt ist.

5. Drahtlosendgerät (128) nach Anspruch 1, wobei die Mittel zum Durchführen einer Benachrichtigung eine Benachrichtigungsschaltung (212) sind.

6. Drahtlosendgerät (218) zum Filtern von Broadcast- oder Multicast-Nachrichten nach Anspruch 4, wobei der Prozessor den Drahtlostransceiver (216) anweist, die Nachricht zu empfangen oder den Empfang der Nachricht abzubrechen basierend zumindest teilweise auf der Bestimmung, ob die Standortinformation des Drahtlosendgeräts den geographischen Standortkriterien entspricht.

7. Ein Verfahren zum Filtern von Broadcast- oder Multicast-Nachrichten, wobei das Verfahren die folgenden Schritte aufweist:
Empfangen, an einem Drahtlosendgerät (128), einer Nachricht, die für wenigstens einige einer Vielzahl von Drahtlosendgeräten vorgesehen ist,
wobei die Vielzahl von Drahtlosendgeräten das Drahtlosendgerät (128) aufweist, weiter Empfangen von geographischen Standortkriterien, die mit der Nachricht assoziiert sind, und nicht geographischer Kriterien, die mit der Nachricht assoziiert sind;
Aktivieren einer Bestimmung einer Standortinformation des Drahtlosendgeräts; und
Bestimmen, ob die Standortinformation des Drahtlosendgeräts einem geographischen Standortkriterium bzw. geographischen Standortkriterien entspricht; wobei die geographischen Standortkriterien eine zivile Grenze,
eine Höhe, eine Geschwindigkeit, eine Fahrtrichtung, einen vorherigen Standort des Drahtlosengeräts oder einen erwarteten zukünftigen Standort des Drahtlosendgeräts aufweisen;
wobei wenn die Standortinformation den geographischen Standortkriterien entspricht, wobei das Verfahren weiter Folgendes aufweist:
Bestimmen (436) einer Nachrichtenklasse für die empfangene Nachricht basierend auf den geographischen Standortkriterien und den nicht geographischen Kriterien; und
Durchführen (440) einer Benachrichtigung, wobei der Benachrichtigungsmodus auf der Nachrichtenklasse basiert, und wobei die Benachrichtigung zu einem Zeitpunkt basierend auf der Nachrichtenklasse durchgeführt wird.

8. Verfahren zum Filtern von Broadcast- oder Multicast-Nachrichten nach Anspruch 7, wobei die geographischen Standortkriterien weiter eine geometrische Form in zwei oder drei Dimensionen aufweist.

9. Verfahren zum Filtern von Broadcast- oder Multicast-Nachrichten nach Anspruch 7, wobei die Nachricht Metadaten beinhaltet, die die geographischen Standortkriterien spezifizieren.

10. Verfahren zum Filtern von Broadcast- oder Multicast-Nachrichten nach Anspruch 7, das weiter Empfangen der Nachricht basierend zumindest teilweise auf dem Bestimmungsschritt aufweist.

11. Verfahren zum Filtern von Broadcast- oder Multicast-Nachrichten nach Anspruch 10, das weiter Folgendes aufweist:
Beginnen, die Nachricht zu empfangen; und
Abbrechen des Empfangs der Nachricht basierend auf dem Bestimmungsschritt.

12. Ein computerlesbares Medium, das Instruktionen aufweist, die, wenn sie von einer Verarbeitungseinheit ausgeführt werden, die Verarbeitungseinheit veranlassen, das Verfahren nach einem der Ansprüche 7 bis 11 zu implementieren.

## Revendications

1. Terminal sans fil (128) pour filtrer des messages de diffusion ou de multidiffusion, le terminal sans fil comprenant :
des moyens pour recevoir (504) un message destiné à au moins certains d'une pluralité de terminaux sans fil, la pluralité de terminaux sans fil comprenant le terminal sans fil (128),
des moyens pour recevoir des critères de position géographique associés au message et des critères non géographiques associés au message ;
des moyens pour permettre la détermination d'informations de position du terminal sans fil (128) ;
des moyens pour déterminer si les informations de position du terminal sans fil (128) correspondent à des critères de position géographique ;
des moyens pour déterminer une classe de message pour le message reçu sur la base des critères de position géographique et des critères non géographiques ;
des moyens pour réaliser une alerte si les informations de position correspondent aux critères de position graphique, le mode d'alerte étant basé sur la classe de message, et l'alerte étant réalisée à un instant basé sur la classe de message.

2. Terminal sans fil (128) pour filtrer des messages de diffusion ou de multidiffusion selon la revendication 1, dans lequel les critères de position géographique comprennent en outre une forme géométrique en deux ou en trois dimensions.

3. Terminal sans fil (128) pour filtrer des messages de diffusion ou de multidiffusion selon la revendication 1, comprenant en outre des moyens pour recevoir le message ou interrompre la réception du message sur la base, au moins en partie, d'une détermination si les critères géographiques du terminal sans fil correspondent à un critère de position géographique.

4. Terminal sans fil (128) selon la revendication 1, dans lequel les moyens pour recevoir sont un émetteur-récepteur sans fil (216) et les moyens pour permettre et les moyens pour déterminer sont un processeur (204) agencé pour donner instruction à l'émetteur-récepteur sans fil (216) de recevoir un message destiné à au moins certains d'une pluralité de terminaux sans fil, la pluralité de terminaux sans fil comprenant un terminal sans fil ; et comprenant en outre une mémoire couplée au processeur.

5. Terminal sans fil (128) selon la revendication 1, dans lequel les moyens pour réaliser une alerte sont un circuit d'alerte (212) .

6. Terminal sans fil (218) pour filtrer des messages de diffusion ou de multidiffusion selon la revendication 4, dans lequel le processeur donne instruction à l'émetteur-récepteur sans fil (216) de recevoir le message ou d'interrompre la réception du message sur la base, au moins en partie, d'une détermination si les informations de position du terminal sans fil correspondent aux critères de position géographique.

7. Procédé pour filtrer des messages de diffusion ou de multidiffusion, le procédé comprenant les étapes suivantes :
recevoir, au niveau d'un terminal sans fil (128), un message destiné à au moins certains d'une pluralité de terminaux sans fil, la pluralité de terminaux sans fil comprenant le terminal sans fil (128), recevoir en outre des critères de position géographique associés au message et des critères non géographiques associés au message ;
permettre la détermination d'informations de position du terminal sans fil ; et
déterminer si les informations de position du terminal sans fil correspondent à un critère de position géographique ; le critère de position géographique comprenant une frontière civile, une altitude, une vitesse, une direction de déplacement, une position passée du terminal sans fil, ou une position future anticipée du terminal sans fil ;
dans lequel, si les informations de position correspondent aux critères de position géographique, le procédé comprend en outre :
déterminer (436) une classe de message pour le message reçu sur la base des critères de position géographique et des critères non géographiques ; et
réaliser (440) une alerte pour laquelle le mode d'alerte est basé sur la classe de message, l'alerte étant réalisée à un instant basé sur la classe de message.

8. Procédé pour filtrer des messages de diffusion ou de multidiffusion selon la revendication 7, dans lequel le critère de position géographique comprend en outre une forme géométrique en deux ou trois dimensions.

9. Procédé pour filtrer des messages de diffusion ou de multidiffusion selon la revendication 7, dans lequel le message comprend des métadonnées spécifiant les critères de position géographique.

10. Procédé pour filtrer des messages de diffusion ou de multidiffusion selon la revendication 7, comprenant en outre la réception du message sur la base, au moins en partie, de l'étape de détermination.

11. Procédé pour filtrer des messages de diffusion ou de multidiffusion selon la revendication 10, comprenant en outre :
commencer à recevoir le message ; et
interrompre la réception du message sur la base de l'étape de détermination.

12. Support lisible par un ordinateur comprenant des instructions qui, lorsqu'elles sont exécutées par une unité de traitement, amènent l'unité de traitement à mettre en oeuvre le procédé de l'une quelconque des revendications 7 à 11.
